# EUROPÄISCHE PATENTSCHRIFT

(11) **EP 0 485 358 B1**
(45) Veröffentlichungstag und Bekanntmachung des Hinweises auf die Patenterteilung: **18.10.1995**
(21) Anmeldenummer: 91890269.3
(22) Anmeldetag: 07.11.1991
(51) Int. Cl.: C05F 17/02

(54) **Kompostiervorrichtung**
Composting apparatus
Appareil pour la fabrication de compost

(30) Priorität: 07.11.1990 AT 2235/90
(43) Veröffentlichungstag der Anmeldung: 13.05.1992
(73) Patentinhaber: Schmidl, Reinhard, Dr., A-8042 Graz (AT)
(72) Erfinder: Schmidl, Reinhard, Dr., A-8042 Graz (AT)
(74) Vertreter: Barger, Werner, Dipl.-Ing.

(56) Entgegenhaltungen:
- CH-A- 669 187
- DE-A- 589 014
- DE-A- 3 624 761

## Beschreibung

Die Erfindung betrifft eine Vorrichtung zum kompostieren organischen Materials, bei der unverrottetes Material am kopf zugegeben wird und auf einem Rost, unter dem sich ein Lagerraum befindet, verrottet, wobei Luft in den Lagerraum eintritt und verrottetes Material aus dem Lagerraum durch eine Öffnung entnommen wird.

Derartige Vorrichtungen sind beispielsweise aus den Prospekten "GRAF Schnell-Komposter", "HERWI Wurmkomposter" und "System Mücke" bekannt. Bei allen kompostiervorrichtungen dieser Art wird der reife Kompost durch Öffnen einer Abdeckung, beispielsweise Hochschieben eines Wandabschnittes, entnommen. Dies gestaltet sich in der Praxis wesentlich schwieriger als erwartet, da der Rohkompost und der noch nicht fertig gereifte Kompost auf dem zu entnehmenden Material aufliegt und eine klebrige, kompakte und verfilzte Struktur aufweist.

Dazu kommt noch, daß die zutrittsöffnungen für die Luft klein dimensioniert sein müssen, um ein Durchfallen auch der kleineren kompostbestandteile zu vermeiden, da diese sonst den kleinen Raum unterhalb der Lochplatte schnell anfüllen, wodurch der Luftzutritt verhindert wird. Das führt aber zu Verstopfungen dieser Öffnungen durch die größeren kompostteile, wodurch die Löcher wirkungslos werden.

Aus einigen Druckschriften wie der DE-A1 26 54 027, der DE-A1 27 37 421, der AT-A 320 688, der AT-A 326 158 und der AT-A 346 375 sind kompostieranlagen bekannt, die Großanlagen betreffen und allesamt bewegbare Vorrichtungen wie Kratzer, Rührer, Schaber, Umlaufmesser und dergl. aufweisen, um verrottetes Material am Boden einer Rottekammer durch einen Rost auszutragen. Der Rost kann dabei verschiedene Form annehmen und auch bewegbar sein, um das Austragen zu bewirken. Allen Vorrichtungen gemeinsam ist, daß das Material nur dann durch den Rost gelangen kann, wenn die Austragvorrichtungen sich bewegen.

Diese Vorrichtungen sind naturgemäß aufwendig in der Herstellung und im Betrieb und bedürfen ständiger Wartung und Pflege.

Es ist das ziel der Erfindung, diese Nachteile zu vermeiden und eine Vorrichtung der eingangs angegebenen Art zu schaffen, bei der der reife Kompost leicht zu entnehmen ist, bei der der Luftzutritt zuverläßig erfolgt und bei der keine Wartung beweglicher Teile notwendig ist
Zu diesem Zweck ist bei einer Vorrichtung der eingangs definierten Art erfindungsgemäß vorgesehen, daß die lichte Weite des Rostes so bemessen ist, daß der reife Kompost nur durch die Schwerkraft und die fortschreitende Verrottung durch den Rost fallend in den Lagerraum gelangt 15-80 cm aufweisen
Durch diese Maßnahme kann auf unerwartete Weise das in den Sammelbehälter gefallene Material, da es keiner Belastung durch das unverrottete Material unterliegt, leicht und problemlos seitlich entnommen werden, wobei rasch und leicht zu öffnende und zu schließende Entnahmeöffnungen vorgesehen sind.

Darüberhinaus erreicht man eine wesentlichte Beschleunigung des kompostiervorganges, der über die ganze Rostfläche einsetzt und sich nach oben fortschreitend ausbreitet. Beim ersten Füllen der Vorrichtung fällt verschiedentlich frisches, nichtkompostiertes Material durch den Rost, doch kommt es durch das Füllen dazu, daß unverrottetes Material über dem Rost verbleibt und durch den Luftzutritt rasch und heftig zu verrotten beginnt. Das nunmehr angerottete Material bleibt in der Folge auf dem Rost liegen, das anfangs durchgefallene Material ermöglicht bei Aufstellung auf belebten Böden das Einwandern von Verrottung bewirkenden Lebewesen aus dem Boden in die Rottekammer, verrottet in der Folge für sich und verbessert durch den Volumensverlust den Luftzutritt zur Rottekammer.
Durch die Herabsetzung der mechanischen Stabilität während des weiteren Verrottens fällt verottetes Material durch den Rost und unverrottetes Material wird durch das Gewicht des Haufenwerkes nachgeschoben.

Die Maschenweite bzw. der Stababstand des Rostes oder dergl. ist um Größenordnungen größer als bei den vorbekannten Lochplatten, da diese das Durchfallen von Kompost möglichst verhindern müssen, während erfindungsgemäß der reife Komopst durchfallen soll und nur der frische oder erst angerottete Kompost zurückgehalten wird.

Die Erfindung beruht auf der Tatsache, daß Rohkompost und verrottendes Material andere mechanische Eigenschaften besitzen als reifer Kompost, und daß diese Unterschiede eine Trennung auf einem Rost erlauben. Die Unterschiede bestehen darin, daß Rohkompost feucht und bindig, ja klebrig ist, was zur Brückenbildung am Rost und damit zum Verbleib in der Rottekammer führt, während reifer Kompost vergleichsweise trocken und bröckelig ist und ohne mechanische Agitation durch den Rost fällt.

Im Folgenden wird immer von einem "Rost" gesprochen, doch sind darunter alle Gebilde zu verstehen, die über Öffnungen verfügen, die Rohkompost zurückhalten und reifen Kompost durchlassen. Die vom Material und der Geometrie abhängigen Abmessungen der Öffnungen kann der Fachmann in Kenntnis der Erfindung und in Abhängigkeit von der zusammensetzung des Rohkomposts leicht bestimmen.

Wird bei der erfindungsgemäßen Vorrichtung ein Holzrost verwendet, so werden die Bretter zur Erhöhung der Traglast und des Rückhaltevermögens unverrotteten Materials hochkant in einem Abstand von über 15 cm, bevorzugt etwa 25 cm angeordnet. Dabei können bei einer Länge von bis zu etwa 1 m die Bretter eine Höhe von etwa 7 cm und eine Stärke von etwa 2 cm aufweisen. Der Haufen auf einem solchen Holzrost kann eine Höhe von gut 1 m erreichen, ohne daß es zu mechanischen Problemen kommt.

Der Abstand zwischen den Roststäben nimmt mit zunehmender Haufenhöhe, zunehmender Roststabhöhe und zunehmender Rauhigkeit der Roststäbe zu. Eine Abstandsobergrenze ist bei etwa 80 cm erreicht, bevorzugt bei etwa 50 cm.

Bei der Verwendung eines Kunststoff- oder Metallrostes kann vorteilhafterweise die Oberfläche rauh belassen oder aufgerauht werden. In einer Ausgestaltung ist vorgesehen, die Roststäbe oder -elemente mit einer konkaven Oberseite zu versehen und horizontale Öffnungen in den Stäben anzubringen, wodurch es zur Ausbildung von "Bionestern" kommt, was besonders dann vorteilhaft ist, wenn die Gefahr der Austrockung des Haufenwerkes besteht.

Das Volumen des Lagerraumes richtet sich nach dem Volumen des Sammelraumes, dem voraussichtlichen Durchsatz und den Entnahmeintervallen. Im Lagerraum kann es noch zu einer erwünschten Ausreifung kommen.

Die erfindungsgemäße Vorrichtung bietet neben allem anderen den Vorteil, auch auf Beton- und Asphaltböden u.dgl. plaziert werden zu können, da im Bereich des Rostes (Aktivzone) auch nach der Entnahme des verrotteten Materials genügend Lebensraum für die Organismen und Mikroorganismen bereit steht, die die Verrrottung bewirken.

Die Erfindung wird anhand der beiliegenden Skizze näher erläutert. Dabei zeigt:

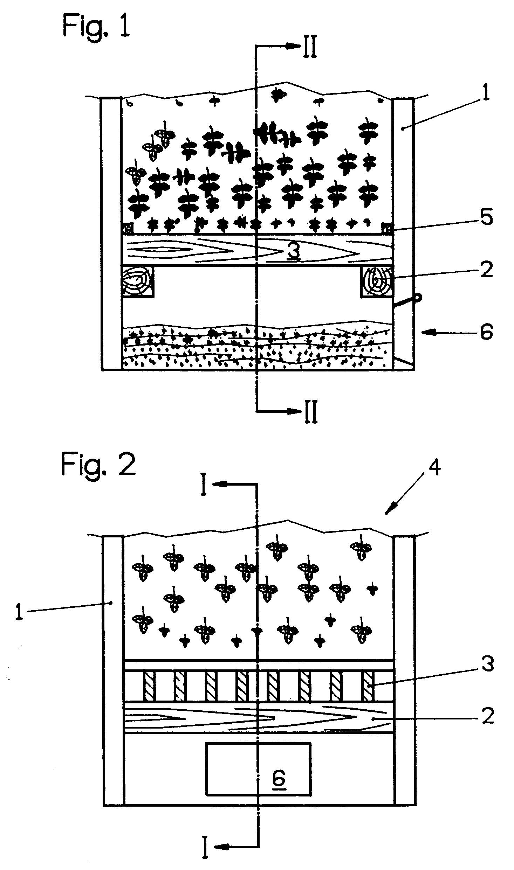

die Fig. 1 eine erfindungsgemäße Rottevorrichtung im Schnitt parallel zu den Roststäben entlang der Linie I-I der Fig. 2,
die Fig. 2 einen Schnitt entlang der Linie II-II der Fig. 1,
die Fig. 3 ein Detail und
die Fig. 4 einen selbsttragenden Rost.

In der Zeichnung ist eine rechteckige Rottevorrichtung dargestellt, in der Praxis verwendet man bevorzugt sechseckige Behälterformen, da die Verrottung in den Ecken erfahrungsgemäß nur langsam und unvollständig vor sich geht, weshalb man bemüht ist, sich der kreisform anzupassen. Die Grundrißform des Rottebehälters hat auf das erfindungsgemäße Vorsehen eines Rostes aber selbstverständlich keinen Einfluß.

Zwischen den Wänden 1 des Rottebehälters ist auf Abstützungen 2 ein aus hochkant gestellten Brettern 3 aufgebauter Rost 4 befestigt.

Zur Versteifung des Rostes sind im Bereich des Randes Latten 5 quer zu den Brettern 3 vorgesehen, die eine Stabilisierung der hochkant angeordneten Bretter bewirken. Derartige Leisten können auch innerhalb der Rostfläche vorgesehen sein. Es ist auch möglich, zumindest einen Stab (Gewindestange) durch Löcher in den Brettern zu führen und an den Brettern zu fixieren (Abstandhalter, Muttern).

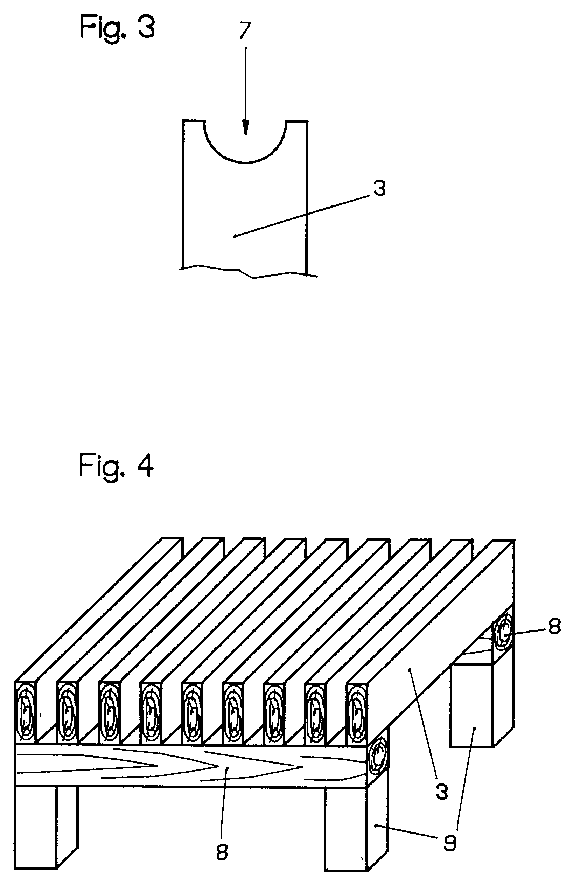

In Fig. 3 ist die konkave Oberfläche 7 eines Roststabes 3 gezeigt. Es kann diese Form selbstverständlich abgeändert werden, z.Bsp. durch Verwenden eines U-Profiles.

Unterhalb des Rostes 4 befindet sich eine Entnahmeöffnung 6, die im gezeigten Ausführungsbeispiel aus einem nach oben und außen abklappbaren Wandbereich besteht. Es ist selbstverständlich möglich, diese Entnahmevorrichtung der Größe nach an die beabsichtigte Art der Entnahme anzupassen, so kann sie insbesondere beim einer sechseckigen Bauweise praktisch den gesamten Abschnitt einer Seitenwand unterhalb des Rostes umfassen. Es ist selbstverständlich möglich, die Entnahmeöffnung nicht durch eine eigene Öffnung in einer festen Seitenwand 1 auszubilden, sondern dadurch, daß die gesamte Wand verschieblich, bevorzugt nach oben verschieblich, ausgebildet ist. Derartige Anordnungen sind bei Vorratsbehältern für Winterstreumaterial etc. bekannt.

In Fig. 4 ist ein selbsttragender Rost gezeigt (die Brettabstände sind unmaßstäblich verkleinert dargestellt), der als selbständiger Bauteil insbesondere für die Nachrüstung bestehender kompostieranlagen geeignet ist. Er kann aber auch bei Neuanlagen vorteilhaft verwendet werden, da er es ermöglicht, die Seitenwände der Vorrichtung, die durch den Haufen praktisch ausschließlich auf zug beansprucht werden, leicht auszubilden.

Bei dieser Ausgestaltung ruhen die Roststäbe 3 auf Querlatten 8, die mit Füßen 9 verbunden sind. Die Abmessungen und die Form des Rostes richten sich nach der Rottevorrichtung, in der der Rost verwendet werden soll.

Die Vorrichtung ist gegen unerwünschtes Eindringen von Regen, Schnee aber auch Ratten u.dgl. an der Oberseite mit einem nicht dargestellten Deckel abgeschlossen. Dabei kann zum Einbringen frischen Materials der Deckel entweder gehoben werden oder mit einer Einbringungsöffnung versehen sein, die wiederum extra verschließbar ausgestaltet sein kann.

Die Abmessungen der Vorrichtung sind in weiten Grenzen variierbar, es ist nur nowendig, die für den Start und das Fortschreiten der kompostierung dem Fachmann bekannten Mindestvolumina einzuhalten, die auch im stationären Betrieb eine vollständige Verrottung gewährleisten. Als Untergrenze können etwa 200 l für den Sammelraum angesehen werden, eine kritische Obergrenze existiert nicht.

Es kann unter Umständen förderlich sein, die Roststäbe 3 schräg anzuordnen, um im Falle eines längere Zeit dauernden Nachschubmangels einen Vorrat an Startmaterial im unteren Bereich des Rostes zur Verfügung zu haben. Besonders in Verbindung mit dieser Maßnahme ist es auch möglich, die Roststäbe nicht parallel zueinander vorzusehen, wodurch Bereiche geschaffen werden können, in denen ein Durchtritt von Material erst nach besonders vollständiger Verrottung erfolgt, was ebenfalls die Schaffung eines Teilvolumens des Haufens mit langer Verweilzeit bewirkt, wodurch Nachschubengpässe überwunden werden können.

Ansonsten ist es möglich, alle beim Kompostieren bekannten Maßnahmen zu ergreifen, beispielsweise das Impfen des Materials mit einem teilweise kompostierten Material, von dem ausgehend die Verrottung beschleunigt erfolgt. Auch das zugeben von Würmern und anderen, den Rottevorgang fördernden Lebewesen ist möglich. Auch das periodische zugeben von Erde, Kalk od.dg. kann erfolgen, wenn es zufolge der zusammensetzung des Ausgangsmaterials wünschenswert erscheint.

Es ist selbstverständlich auch möglich, die der Erfindung zugrundeliegende Idee bei der Verrottung großer Mengen anzuwenden, es ist nur darauf Bedacht zu nehmen, daß eine Entfernung des durch den Rost gefallenen verrotteten Materials erfolgen kann und daß der Rost die notwendige mechanische Stabilität aufweist, um den beträchtlichen Gewichten und Drücken standhalten zu können. Dabei können im landwirtschaftlichen Bereich übliche Fördergeräte, wie Kratzförderer, Schraubenförderer, pneumatische Förderer od.dgl. unterhalb des Rostes zur Ausbringung des durchgefallenen Materials verwendet werden. Wenn genügend Platz zur Verfügung steht, kann der Raum unterhalb des Rostes trichter- oder grabenförmig ausgestaltet werden und ein Abzug des verrotteten Materials durch Schwerkraft oder durch Förderer in den Gräben erfolgen.

Wie oben erwähnt, ist es nicht notwendig, daß ein Rost verwendet wird. Es kann auch ein siebartiges Gebilde oder ein Netz verwendet werden, wenn nur die Maschenweite so gewählt wird, daß es dem Material erst nach Erreichen des gewünschten Verrottungsgrades möglich ist, durch den Bauteil zu gelangen. Dies kann in kenntnis des Ausgangsmaterials und des gewünschten Verrottungsgrades vom Fachmann leicht bestimmt werden, da entsprechende Erfahrungswerte großteils vorliegen, oder anhand einfacher Versuche leicht bestimmt werden können.

## Patentansprüche

1. Vorrichtung zum Kompostieren organischen Materials, bei der unverrottetes Material am Kopf zugegeben wird und auf einem Rost (4), unter dem sich ein Lagerraum befindet, verrottet, wobei Luft in den Lagerraum eintritt und verrottetes Material aus dem Lagerraum durch eine Öffnung (6) entnommen wird, dadurch gekennzeichnet, daß die lichte Weite des Rostes so bemessen ist, daß der reife Kompost nur durch die Schwerkraft und die fortschreitende Verrottung durch den Rost fallend in einen Lagerraum gelangt und benachbarte Roststäbe einin Abstand von 15-80 cm, bevorzugt etwa 50 cm, aufweisen

2. Vorrichtung nach Anspruch 1, dadurch gekennzeichnet, daß bei Verwendung eines Holzrostes aus parallelen Brettern (3) die Bretter hochkant in einem Abstand von bevorzugt etwa 15 cm bis 50 cm angeordnet sind.

3. Vorrichtung nach Anspruch 1, dadurch gekennzeichnet, daß bei Verwendung eines Kunststoff- oder Metallrostes die Oberfläche rauh belassen oder aufgerauht ist.

4. Vorrichtung nach einem der Ansprüche 1 bis 3, dadurch gekennzeichnet, daß die Roststäbe oder -elemente mit einer konkaven Oberseite (7) versehen sind und horizontale Ausnehmungen oder Löcher in ihren vertikalen Seiten aufweisen.

5. Vorrichtung nach einem der Ansprüche 1 bis 4, dadurch gekennzeichnet, daß der Rost (4) schräg bezüglich der Horizontalen angeodnet ist.

6. Vorrichtung nach Anspruch 2, dadurch gekennzeichnet, daß die Bretter (3) eine Höhe von etwa 7 cm und eine Stärke von etwa 2 cm aufweisen.

7. Vorrichtung nach Anspruch 1, dadurch gekennzeichnet, daß der Rost schräg liegt und die Roststäbe im wesentlichen strahlenförmig angeordnet sind, wobei die Rostneigung so verläuft, daß die Bereiche mit kleinem Stababstand tiefer liegen als die mit großem Stababstand.

## Claims

1. Device for composting organic materials in which un-decayed material is added at the top and allowed to decay on a grate (4), under which a storage space is located, whereby air enters the storage space and decayed material is removed from the storage space through an opening (6), characterised in that the clear width of the grate is selected in such a manner that the mature compost falls through the grate into a storage space only as a result of gravity and the progress of decay, and that neighbouring slats of the grate are spaced at intervals of 15-80 cm, by preference of around 50 cm.

2. Device in accordance with Claim 1, characterised in that when using a wooden grate made from parallel slats (3), the slats are arranged vertically and spaced at intervals of around 15 to 50 cm.

3. Device in accordance with Claim 1, characterised in that when using a plastic or metal grate, the surface is either left rough or roughened.

4. Device in accordance with one of Claims 1 - 3, characterised in that the slats or elements of the grate are provided with a concave upper surface (7) and have horizontal apertures or holes in their vertical sides.

5. Device in accordance with one of Claims 1 to 4, characterised in that the grate (4) is arranged obliquely to the horizontal.

6. Device in accordance with Claim 2, characterised in that the slats (3) are approximately 7 cm high and approximately 2 cm thick.

7. Device in accordance with Claim 1, characterised in that the grate lies obliquely and the slats of the grate are arranged essentially radially, whereby the inclination of the slats is such that the regions in which the spacing between slats is smaller are positioned lower than those with wider spacing between slats.

## Revendications

1. Dispositif de compostage d'un matériau organique, dans lequel le matériau non putréfié est ajouté en tête et putréfié sur une grille (4), sous laquelle se trouve un magasin, de l'air pénétrant dans le magasin et le matériau putréfié étant extrait du magasin par une ouverture (6), caractérisé en ce que l'ouverture de la grille est dimensionnée de telle sorte que le compost prêt ne parvient dans un magasin en tombant à travers la grille que par la force de pesanteur et la putréfaction progressive et que des barreaux de grille adjacents présentent un écartement de 15 - 80 cm, de préférence d'environ 50 cm.

2. Dispositif selon la revendication 1, caractérisé en ce que, lors de l'utilisation d'une grille en bois avec planches parallèles (3), les planches sont disposées de chant avec, de préférence, un écartement d'environ 15 cm jusqu'à 50 cm.

3. Dispositif selon la revendication 1, caractérisé en ce que, lors de l'utilisation d'une grille en plastique ou en métal, la surface est laissée rugueuse ou rendue rugueuse.

4. Dispositif selon l'une des revendications 1 à 3, caractérisé en ce que les barreaux ou les éléments de la grille sont pourvus d'une partie supérieure concave (7) et présentent des creux ou trous horizontaux dans leurs faces verticales.

5. Dispositif selon l'une des revendications 1 à 4, caractérisé en ce que la grille (4) est disposée en diagonale par rapport à l'horizontale.

6. Dispositif selon la revendication 2, caractérisé en ce que les planches (3) présentent une hauteur d'environ 7 cm et une épaisseur d'environ 2 cm.

7. Dispositif selon la revendication 1, caractérisé en ce que la grille repose en position inclinée et que les barreaux de la grille sont disposés essentiellement radialement, l'inclinaison de la grille se développant de telle sorte que les zones comportant un petit écartement de barreau sont plus basses que celles comportant un grand écartement de barreau.
